# EUROPEAN PATENT SPECIFICATION

(11) **EP 1 488 963 B1**
(45) Date of publication and mention of the grant of the patent: **14.05.2008**
(21) Application number: 03076886.5
(22) Date of filing: 17.06.2003
(51) Int. Cl.: B60R 21/09

(54) **Adjustable inner floor for pedals**
Verstellbare Innenbodenfläche für Fusspedale
Plancher intérieur ajustable pour pédalier

(43) Date of publication of application: 22.12.2004
(73) Proprietor: Ford Global Technologies, LLC, Dearborn, MI 48126 (US)
(72) Inventor: Fosse, Tore, 423 52 Torslanda (SE)
(74) Representative: Hammond, Andrew David

(56) References cited:
- EP-A- 1 010 588
- DE-A- 19 541 607
- DE-A- 19 727 598
- GB-A- 1 278 919
- US-B1- 6 182 525
- US-B1- 6 349 965

## Description

### TECHNICAL FIELD

The present invention relates to a foot protection device for a driver of a vehicle, in particular a foot protection device comprising a supplementary floor panel adapted to accommodate pedals when retracted.

### BACKGROUND OF THE INVENTION

Modern vehicles are designed to protect vehicle occupants in the event of a collision between the vehicle and a foreign object, such as another vehicle or a fixed object such as a tree, lamppost, etc. In the event of a head-on collision, it is more difficult to ensure adequate protection of the driver than of any passengers because of the necessity to have foot-operated pedals and a steering column in the driver foot-well of the vehicle. Should a collision be particularly forceful, there is a risk that the driver foot-well deforms due to intrusion of e.g. the steering column. Furthermore, since the driver will be thrown forward during such a collision, his/her feet may be injured by the pedals, particularly if the foot-well is deformed to any great extent. In order to reduce the risk of the driver's feet being thrown towards or past the pedals, it has been proposed to provide the vehicle floor with a raised portion on the driver's side of the pedals against which the heel(s) of the foot(feet) may abut.

In order to accommodate drivers of different height and/or leg length, it is known to provide vehicles with adjustable pedals, i.e. the pedals can be moved closer to or further away from the driver's seat. It is desirable to be able to ensure that vehicles equipped with adjustable pedals will also offer adequate protection for the feet of the driver.

A foot protection device for a driver of a vehicle is known from US-A-6,349,965. In a first embodiment, a movable floor section is displaced simultaneously with adjustment of adjustable pedals. A second embodiment of a movable floor section is disclosed which is used in connection with non-adjustable pedals. The movable floor section of the second embodiment may be provided with recesses for the pedals. In the event of an accident, the floor section is caused to be displaced towards the pedals so that the driver's feet can no longer be squeezed between the movable floor section and the pedals.

EP-A-1 010 588 describes a foot protection device comprising a movable floor section. In the event of a collision, the movable floor section is displaced towards the seat of the driver to thereby move the driver's feet away from the deformation area to a safer area closer to the driver's seat.

US-A-6,182,525 describes a movable vehicle pedal apparatus for helping to reduce injury to a lower extremity of a driver of a vehicle. In the event of a collision, a mechanism moves the pedals from an operative condition to an inoperative condition away from the feet of the driver.

### SUMMARY OF THE INVENTION

It is therefore an object of the invention to provide a foot protection device for use with vehicles having adjustable pedals.

This object is achieved in accordance with the present invention by a foot protection device according to claim 1 for a driver of a vehicle, the vehicle being provided with a number of adjustable foot-actuated pedals. The foot protection device comprises a supplementary floor panel having a number of recesses or openings, which are adapted to accommodate said number of pedals when the pedals are fully retracted. The floor panel is adapted to co-operate with mounting means in the vehicle such that the supplementary floor panel is displaceable in the length direction of the vehicle to thereby position the floor panel below the pedals.

By providing the claimed foot protection device with a supplementary floor panel, a flat vehicle floor surface is attained which can be optimally positioned in relation to the pedals so as to ensure increased protection for drivers of different heights. The supplementary floor is attached to a frame that will follow the pedals during adjustment when the driver alters the driving position. The supplementary floor panel will thereby assist in providing a foot-well which is substantially free of protrusions which may cause injury to the driver in the event of a collision.

Preferably, the floor panel is mounted to an elongate heel support having a first end and a second end, said first and second ends being associated with first and second support means mounted to co-operate with said mounting means.

Other features and advantages of the invention will be better understood from the following description describing certain specific embodiments of the invention taken together with the accompanying drawings.

### BRIEF DESCRIPTION OF DRAWINGS

The invention will now be described in greater detail by way of example only and with reference to the attached drawings, in which:
- FIG. 1: is a schematic perspective view of the foot protection device when mounted to a vehicle;
- FIG. 2: is a schematic perspective view corresponding to FIG. 1, though illustrating the invention when the vehicle undergoes a violent collision;
- FIG. 3: is a schematic side-view of the foot protection device of FIG. 1, and
- FIG. 4: is a side view of foot protection device of FIG. 1.

### DETAILED DESCRIPTION OF PREFERRED EMBODIMENTS

As required, detailed embodiments of the present invention are disclosed herein; however, it is to be understood that the disclosed embodiments are merely examples of the invention that may be further embodied in various and alternative forms other than described below. The drawings are not necessarily to scale, and some mechanisms may be exaggerated or minimized to show details of particular components or features. Therefore, specific structural and functional details disclosed herein are not to be interpreted as limiting in any sense, but merely form a basis for the claims and as a representative basis for enabling one skilled in the art to variously put the present invention into practice.

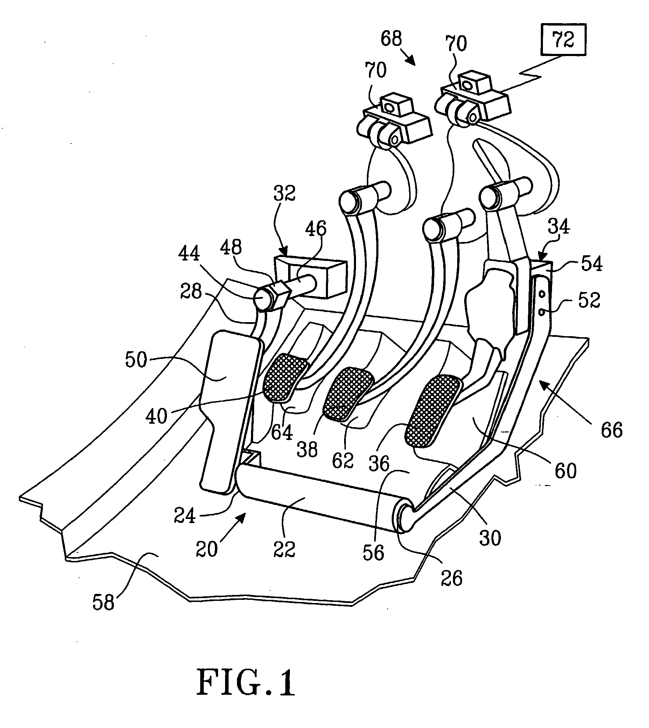

In the drawings, reference numeral 20 generally denotes a foot protection device according to the present invention. With particular reference to FIG. 1, illustrating a preferred embodiment of the invention, the foot protection device 20 comprises an elongate heel support 22 having a first end 24 and a second end 26. The first and second ends are associated with first and second support means 28, 30, respectively. In the drawings, the first and second support means 28, 30 are depicted as first and second support arms, though it will be apparent to the skilled person that any suitable support means could be employed. For example, one support means could be an arm and one support means could be a slide carriage adapted for co-operation with a runner or rail mounted to the vehicle. Irrespective of their form, and as is apparent from FIG. 1, the first and second support means 28, 30 are adapted to co-operate with mounting means 32, 34 in the vehicle such that the foot protection device 20 is displaceable in the length direction of the vehicle to thereby position the foot protection device 20 below the pedals 36, 38, 40 of the vehicle.

The above described foot protection device 20 includes a supplementary floor panel 56 mounted between the elongate heel support 22 and at least the first support arm 28. In this manner, the supplementary floor panel 56 will move together with the remainder of the foot protection device 20. It is to be noted that the expression "supplementary floor panel" denotes a structure which is intended to lie on or over an existing floor 58 of the vehicle. As illustrated in FIG. 1, the supplementary floor panel 56 is intended to extend in a forwards direction (seen in the normal direction of travel of the vehicle) from, or in the vicinity of, the elongate heel support 22 to occupy a position between the existing floor 58 and the pedals 36, 38, 40.

In a more general way, without departing from the invention, the floor panel could be mounted to any other suitable "frame-like" structure. However, this will not be further disclosed herein since it is evident for a skilled person.

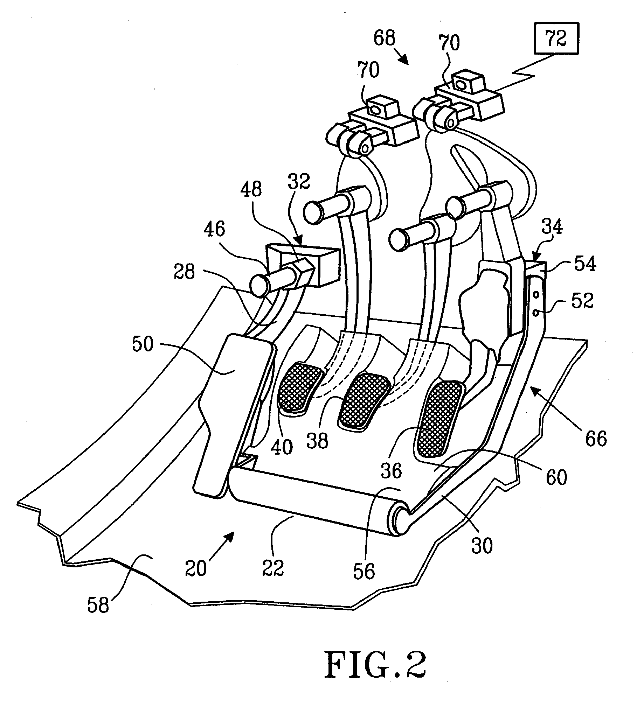

Typically, the supplementary floor panel 56 is made of metal such as sheet steel or aluminium, or from a plastics material which may be reinforced with suitable fibres. The supplementary floor panel 56 comprises a number of recesses or openings 60, 62, 64 which are adapted to accommodate the pedals 36, 38, 40 when the pedals 36, 38, 40 are fully retracted, as shown in FIG. 2. Accordingly, the recesses or openings 60, 62, 64 should be dimensioned with respect to the pedals 36, 38, 40 so that, in their fully retracted position, the pedals 36, 38, 40 form a surface substantially flush with the upper surface of the supplementary floor panel 56. In this manner, the foot-well of the vehicle is substantially free of any protrusions upon which the driver's feet may be caught.

In the illustrated embodiment, the first support means 28 of the foot protection device 20 comprises a first support arm 28 extending from the first end 24 of the elongate heel support 22. Towards or at its end remote from the elongate heel support 22, the first support arm 28 is provided with first attachment means 44 which is adapted to co-operate with the mounting means 32 in the vehicle. In one embodiment of the invention, the first attachment means 42 on the first support arm 28 comprises a slide arrangement 44 for co-operation with a guide member 46, for example a rectilinear rod, constituting at least a part of the mounting means 32 in the vehicle. The slide arrangement 44 may comprise a substantially cylindrical housing 48 forming an extension of the first support arm 28. In this respect, it is to be noted that the expression "substantially cylindrical" is intended to encompass any hollow form, be it closed or partially open. Important for this embodiment of the invention is only that the housing 48 is capable of receiving the guide member 46. Thus, and as is illustrated in Figs. 1 and 2, the substantially cylindrical housing 48 is adapted to receive the guide member 46 such that the first support arm 28 is then able to move along the guide member 46.

Furthermore, the first support arm 28 can be adapted to provide a foot-rest 50. Typically, the foot-rest is provided to enable a driver to rest his/her left foot. The foot-rest 50 may be constituted by a plate mounted to the first support arm 28, for example by fasteners such as nuts and bolts, rivets or screws, or, depending on the materials of the constituent components, it may be welded thereto. Alternatively, the foot-rest 50 may be integrally formed with the first support arm 28, for example by being cast together with the first support arm 28.

In the illustrated embodiment, the second support means 30 of the foot protection device 20 comprises a second support arm 30 extending from the second end 26 of the elongate heel support 22. The second support arm 30 is provided towards or at its end remote from the elongate heel support 22 with second attachment means 52 adapted to co-operate with the mounting means 34 in the vehicle. As shown in FIGS. 1 and 2, second attachment means 52 on the second support arm 30 is adapted to co-operate with an accelerator pedal mounting 54 constituting at least a part of the mounting means 34 in the vehicle. Since, in this described embodiment of the invention, the second attachment means 52 is adapted to co-operate with the accelerator pedal mounting 54, any adjustment of the accelerator pedal, i.e. an adjustment of its position in the length direction of the vehicle, will automatically effect a corresponding adjustment of the position of the foot protection device 20.

The elongate heel support 22 may have any suitable shape. To enable one and the same shape to be used for drivers of any height and build, a suitable shape is substantially cylindrical. Both for reasons of comfort and ease of adjustment, the elongate heel support 22 may be rotatably mounted between the first and second support arms 28, 30. For instance, the heel support may have a concentric cylindrical shape. Purely by way of example, the elongate heel support may have a length of from 150 mm to 300 mm, preferably about 200 mm, and a diameter of from 20 mm to 50 mm, preferably about 30 mm. The heel support 22 may be provided with a coating of rubber being labelled, for instance, with a logotype, or with the same carpet as provided on the floor of the vehicle. Any desired appearance could of course be provided, almost without limitation; however, preferably the heel support is adapted to be easily movable across the floor even if stones, dirt or the like is present.

In order to effect full retraction of the pedals 36, 38, 40, as illustrated in FIG. 2, the pedal assembly 68 may include at least one actuator 70. In a manner known per se, the actuator is adapted to be actuated in response to a signal initiated by a crash sensor 72. By means of a suitable linkage, when actuated, the actuator 70 decouples the pedal (or pedals) 36, 38, 40 and effects full retraction of the pedals into the recesses or openings 60, 62, 64 of the supplementary floor panel 56. Obviously, braking of the vehicle is then effected automatically without any driver involvement. The number of actuators 70 will depend primarily on the type of transmission which is fitted to the vehicle. Thus, if the transmission does not require manual operation of a clutch, the pedal assembly 68 need include only one actuator to effect retraction of the accelerator pedal 36 and brake pedal 38. Should the pedal assembly include a clutch pedal 40, the clutch pedal may be provided with a dedicated actuator.

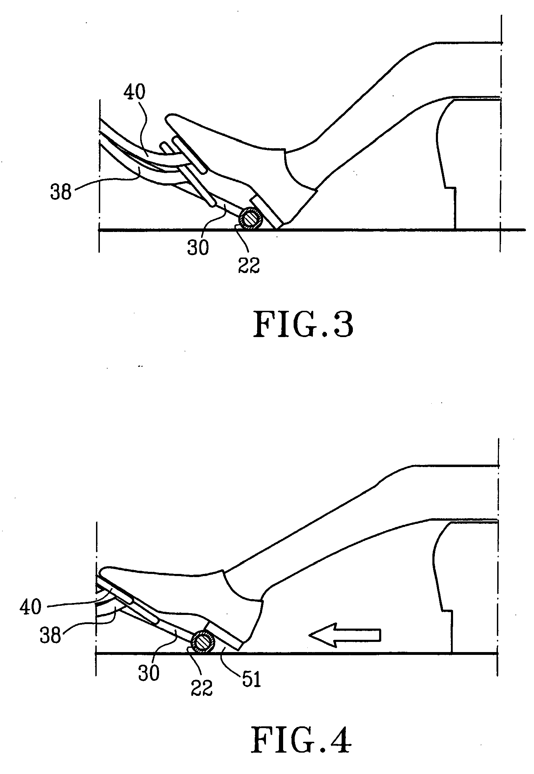

Finally, Figs. 3 and 4 schematically illustrate how the foot protection device and foot protection system of the present invention may be used by a driver. The elongate heel support 22 supports the heel 51 of a drivers foot or shoe. The pedals are operated by the foot or feet pivoting about the heel support 22. In the event of a head-on collision, the driver is thrown forwards, and the heel support 22 tends to hinder forward progress of the feet deeper into the foot-well and the supplementary floor 56 creates a flat surface together with the retracted pedals.

Herein, the term "comprising" is not limited to the particular elements mentioned, but also further elements could be included.

While preferred embodiments of the invention have been disclosed in detail, it should be understood by those skilled in the art that various other modifications may be made to the illustrated embodiments, the scope of the invention being defined in the appended claims. For instance any type of vehicle having adjustable pedals such as a car could benefit from the inventive device. Also, the adjusting mechanism for the pedals could be any suitable type, such as a power-operated push rod, or any other suitable type of mechanism. As has been described, it is advantageous if the foot protection device of the present invention is adjusted simultaneously, i.e. automatically, with the pedal adjustment. Nevertheless, it is to be understood that means may be provided to permit the position of the foot protection device to be altered with respect to the position of the pedals to thereby provide individual adaptation of the foot protection system to each driver.

## Claims

1. A foot protection device (20) for a driver of a vehicle, said vehicle being provided with a number of adjustable foot-actuated pedals (36, 38, 40), the foot protection device (20) comprising:
a supplementary floor panel (56) having a number of recesses or openings (60, 62, 64) which are adapted to accommodate said number of pedals (36, 38, 40), said floor panel (56) being adapted to co-operate with mounting means (32, 34) in said vehicle such that the position of the supplementary floor panel (56) is adjustable in the length direction of the vehicle simultaneously with adjustment of said pedals (36, 38, 40) or independently of adjustment of said pedals to thereby position said floor panel (56) below said number of pedals (36, 38, 40) and to substantially maintain that position in the event of a collision.

2. The foot protection device according to claim 1, wherein the floor panel (56) is mounted to an elongate heel support (22) having a first end (24) and a second end (26), said first and second ends (24, 26) being associated with first and second support means (28, 30) mounted to co-operate with said mounting means (32, 34).

3. The foot protection device of claim 2, wherein said first support means (28) comprises a first support arm (28) extending from said first end (24) of said elongate heel support (22), said first support arm (28) being provided with first attachment means (42) adapted to co-operate with said mounting means (32) in said vehicle.

4. The foot protection device according to claim 3, wherein said first attachment means (42) on said first support arm (28) comprises a slide arrangement (44) for co-operation with a guide member (46) constituting at least a part of said mounting means (32) in said vehicle.

5. The foot protection device as claimed in claim 4, wherein said slide arrangement (44) comprises a cylindrical housing (48) forming an extension of said first support arm (28), said cylindrical housing (48) being adapted to receive said guide member (46) such that said first support arm (28) can move along said guide member (46).

6. The foot protection device according to any one of the preceding claims 1-5, wherein the floor panel (56) is made of metal such as sheet steel or aluminium.

7. The foot protection device according to any one of the preceding claims 1-5, wherein the floor panel (56) is made of a plastics material, preferably reinforced with suitable fibres.

8. The foot protection device as claimed in any one of the claims 3-5, wherein said first support arm (28) is adapted to provide a foot-rest (50).

9. The foot protection device according to any one of claims 2 to 8, wherein said second support means (30) comprises a second support arm (30) extending from said second end (26) of said elongate heel support (22), said second support arm (30) being provided with second attachment means (52) adapted to co-operate with said mounting means (34) in said vehicle.

10. The foot protection device as claimed in claim 9, wherein said second attachment means (52) on said second support arm (30) is adapted to co-operate with an accelerator pedal mounting (54) constituting at least a part of said mounting means (34) in said vehicle.

11. The foot protection device as claimed in any one of claims 2 to 10, wherein said elongate heel support (22) is substantially cylindrical.

12. The foot protection device as claimed in claim 11, wherein said elongate heel support (22) is rotatably mounted between said first and second support arms (28, 30).

13. The foot protection device as claimed in any one of the claims 1-12, wherein said device (20) is adapted to communicate with at least one actuator (70) adapted to effect full retraction of said number of adjustable pedals (36, 38, 40).

14. The foot protection device as claimed in claim 13, wherein said at least one actuator (70) is adapted to be actuated in response to a signal initiated by a crash sensor (72).

## Patentansprüche

1. Eine Fußschutzeinrichtung (20) für einen Fahrer eines Fahrzeugs, wobei das Fahrzeug mit einer Anzahl einstellbarer, fußbetriebener Pedale (36, 38, 40) versehen ist, und wobei die Fußschutzeinrichtung (20) folgendes umfasst:
eine zusätzliche Bodenplatte (56), die eine Anzahl Vertiefungen oder Öffnungen (60, 62, 64) hat, die daran angepasst sind, die Anzahl von Pedalen (36, 38, 40) aufzunehmen, wobei die Bodenplatte (56) so ausgelegt ist, dass sie mit Montagemitteln (32, 34) im Fahrzeug zusammenwirkt, so dass die Position der zusätzlichen Bodenplatte (56) in der Längsrichtung des Fahrzeugs entweder gleichzeitig mit der Verstellung der Pedale (36, 38, 40) oder unabhängig von der Verstellung der Pedale verstellbar ist, um **dadurch** die Bodenplatte (56) unter der Anzahl von Pedalen (36, 38, 40) zu positionieren und diese Position im Großen und Ganzen im Fall eines Zusammenstoßes beizubehalten.

2. Fußschutzeinrichtung nach Anspruch 1, **dadurch gekennzeichnet, dass** die Bodenplatte (56) an eine längliche Absatzstütze (22) montiert ist, welche ein erstes Ende (24) und ein zweites Ende (26) hat, wobei diese ersten und zweiten Enden (24, 26) ersten und zweiten Stützmitteln (28, 30) zugeordnet sind, die so befestigt sind, dass sie mit den Montagemitteln (32, 34) zusammenwirken.

3. Fußschutzeinrichtung nach Anspruch 2, **dadurch gekennzeichnet, dass** das erste Stützmittel (28) einen ersten Stützarm (28) umfasst, der sich vom ersten Ende (24) der länglichen Absatzstütze (22) aus erstreckt, wobei der erste Stützarm (28) mit ersten Befestigungsmitteln (42) versehen ist, die so ausgelegt sind, dass sie mit den Montagemitteln (32) in dem Fahrzeug zusammenwirken.

4. Fußschutzeinrichtung nach Anspruch 3, **dadurch gekennzeichnet, dass** die ersten Befestigungsmittel (42) an dem ersten Stützarm (28) eine Gleitanordnung (44) zum Zusammenwirken mit einem Führungsteil (46) umfassen, welches wenigstens einen Teil der Montagemittel (32) in dem Fahrzeug bildet.

5. Fußschutzeinrichtung nach Anspruch 4, **dadurch gekennzeichnet, dass** die Gleitanordnung (44) ein zylindrisches Gehäuse (48) umfasst, das eine Fortsetzung des ersten Stützarms (28) bildet, wobei das zylindrische Gehäuse (48) dafür ausgebildet ist, das Führungsteil (46) aufzunehmen, sodass sich der erste Stützarm (28) am Führungsteil (46) entlang bewegen kann.

6. Fußschutzeinrichtung nach einem der vorhergehenden Ansprüche 1 - 5, **dadurch gekennzeichnet, dass** die Bodenplatte (56) aus Metall, wie Stahlblech oder Aluminium, hergestellt ist.

7. Fußschutzeinrichtung nach einem der vorhergehenden Ansprüche 1 - 5, **dadurch gekennzeichnet, dass** die Bodenplatte (56) aus Kunststoffmaterial, vorzugsweise aus mit geeigneten Fasern verstärktem, hergestellt ist.

8. Fußschutzeinrichtung nach einem der Ansprüche 3 - 5, **dadurch gekennzeichnet, dass** der erste Stützarm (28) so angepasst ist, dass er eine Fußstütze (50) bietet.

9. Fußschutzeinrichtung nach einem der Ansprüche 2-8, **dadurch gekennzeichnet, dass** das zweite Stützmittel (30) einen zweiten Stützarm (30) umfasst, der sich vom zweiten Ende (26) der länglichen Absatzstütze (22) aus erstreckt, wobei der zweite Stützarm (30) mit zweiten Befestigungsmitteln (52) versehen ist, die so ausgelegt sind, dass sie mit den Montagemitteln (34) in dem Fahrzeug zusammenwirken.

10. Fußschutzeinrichtung nach Anspruch 9, **dadurch gekennzeichnet, dass** das zweite Befestigungsmittel (52) an dem zweiten Stützarm (30) so ausgebildet ist, dass es mit einer Gaspedalhalterung (54) zusammenwirkt, die wenigstens einen Teil der Montagemittel (34) in dem Fahrzeug bildet.

11. Fußschutzeinrichtung nach einem der Ansprüche 2 - 10, **dadurch gekennzeichnet, dass** die längliche Absatzstütze (22) im Großen und Ganzen zylindrisch ist.

12. Fußschutzeinrichtung nach Anspruch 11, **dadurch gekennzeichnet, dass** die längliche Absatzstütze (22) drehbeweglich zwischen den ersten und zweiten Stützarmen (28, 30) angebracht ist.

13. Fußschutzeinrichtung nach einem der Ansprüche 1 - 12, **dadurch gekennzeichnet, dass** die Einrichtung (20) darauf ausgerichtet ist, mit mindestens einem Aktuator (70) zusammenzuwirken, der so ausgelegt ist, dass er das vollständige Zurückziehen der Anzahl verstellbarer Pedale (36, 38, 40) bewirkt.

14. Fußschutzeinrichtung nach Anspruch 13, **dadurch gekennzeichnet, dass** dieser mindestens eine Aktuator (70) so ausgelegt ist, dass er in Reaktion auf ein Signal betätigt wird, das von einem Kollisionssensor (72) ausgelöst wird.

## Revendications

1. Dispositif de protection de pied (20) pour un conducteur de véhicule, ledit véhicule étant muni d'un certain nombre de pédales ajustables, actionnées au pied (36, 38, 40), le dispositif de protection du pied (20) comprenant :
un panneau de sol supplémentaire (56) avec un certain nombre d'évidements ou d'ouvertures (60, 62, 64) qui sont aptes à loger ledit nombre de pédales (36, 38, 40), ledit panneau de sol (56) étant apte à coopérer avec les moyens de montage (32, 34) dans ledit véhicule, de telle sorte que la position du panneau de sol supplémentaire (56) est ajustable dans la direction longitudinale du véhicule, simultanément avec l'ajustement desdites pédales (36, 38, 40) ou indépendamment de l'ajustement desdites pédales, pour positionner ainsi ledit panneau de sol (56) au-dessous dudit nombre de pédales (36, 38, 40) et pour maintenir sensiblement cette position en cas de collision.

2. Dispositif de protection de pied selon la revendication 1, dans lequel le panneau de sol (56) est monté sur un support de talon oblong (22) présentant une première extrémité (24) et une seconde extrémité (26), lesdites première et seconde extrémités (24, 26) étant associées aux premiers et seconds moyens de support (28, 30) montés pour coopérer avec lesdits moyens de montage (32, 34).

3. Dispositif de protection de pied selon la revendication 2, dans lequel lesdits premiers moyens de support (28) comprennent un premier bras de support (28) s'étendant à partir de ladite première extrémité (24) dudit support de talon oblong (22), ledit premier bras de support (28) étant muni de premiers moyens de fixation (42) aptes à coopérer avec lesdits moyens de montage (32) dans ledit véhicule.

4. Dispositif de protection de pied selon la revendication 3, dans lequel lesdits premiers moyens de fixation (42) sur ledit premier bras de support (28) comprennent un agencement coulissant (44) pour la coopération avec un élément de guidage (46) constituant au moins une partie desdits moyens de montage (32) dans ledit véhicule.

5. Dispositif de protection de pied tel que défini dans la revendication 4, dans lequel ledit agencement coulissant (44) comprend un logement cylindrique (48) formant un prolongement dudit premier bras de support (28), ledit logement cylindrique (48) étant apte à recevoir ledit élément de guidage (46), de telle sorte que ledit premier bras de support (28) peut se déplacer le long dudit élément de guidage (46).

6. Dispositif de protection de pied selon l'une quelconque des revendications précédentes 1-5, dans lequel le panneau de sol (56) est réalisé en métal, tel qu'une tôlerie en acier ou en aluminium.

7. Dispositif de protection de pied selon l'une quelconque des revendications précédentes 1-5, dans lequel le panneau de sol (56) est réalisé en un matériau plastique, de préférence renforcé avec des fibres appropriées.

8. Dispositif de protection de pied tel que défini dans l'une quelconque des revendications 3-5, dans lequel ledit premier bras de support (28) est apte à fournir un repose - pieds (50).

9. Dispositif de protection de pied selon l'une quelconque des revendications 2 à 8, dans lequel lesdits seconds moyens de support (30) comprennent un second bras de support (30) s'étendant à partir de ladite seconde extrémité (26) dudit support de talon oblong (22), ledit second bras de support (30) étant muni de seconds moyens de fixation (52) aptes à coopérer avec lesdits moyens de montage (34) dans ledit véhicule.

10. Dispositif de protection de pied tel que défini dans la revendication 9, dans lequel lesdits seconds moyens de fixation (52) sur ledit second bras de support (30) sont aptes à coopérer avec un montage de pédale d'accélérateur (54) constituant au moins une partie desdits moyens de montage (34) dans ledit véhicule.

11. Dispositif de protection de pied selon l'une quelconque des revendications 2 à 10, dans lequel ledit support de talon oblong (22) est sensiblement cylindrique.

12. Dispositif de protection de pied tel que défini dans la revendication 11, dans lequel ledit support de talon oblong (22) est monté de façon rotative entre lesdits premier et second bras de support (28, 30).

13. Dispositif de protection de pied tel que défini dans l'une quelconque des revendications 1-12, dans lequel ledit dispositif (20) est apte à communiquer avec au moins un organe d'actionnement (70) capable d'effectuer l'escamotage total dudit nombre de pédales ajustables (36, 38, 40).

14. Dispositif de protection de pied tel que défini dans la revendication 13, dans lequel au moins un organe d'actionnement (70) est apte à être actionné en réponse à un signal déclenché par un capteur de collision (72).
